# FASCICULE DE BREVET EUROPEEN

(11) **EP 3 003 616 B1**
(45) Date de publication et mention de la délivrance du brevet: **02.08.2017**
(21) Numéro de dépôt: 14733273.8
(22) Date de dépôt: 05.06.2014
(51) Int. Cl.: B23B 37/00, B23B 47/34, B23Q 5/32

(54) **DISPOSITIF D'USINAGE VIBRATOIRE**
VIBRATIONSBEARBEITUNGSVORRICHTUNG
VIBRATORY MACHINING APPARATUS

(30) Priorité: 06.06.2013 FR 1355224
(43) Date de publication de la demande: 13.04.2016
(73) Titulaire: Centre Technique Des Industries Mecaniques, 60300 Senlis (FR); AMVALOR, 75013 Paris (FR)
(72) Inventeur: MASCIANTONIO, Ugo, F-59267 Proville (FR); MORARU, George, F-13100 Aix-en-Provence (FR)
(74) Mandataire: Gendron, Vincent Christian
(86) Numéro de dépôt international: PCT/FR2014/051350
(87) Numéro de publication internationale: WO 2014/195647

(56) Documents cités:
- CH-A5- 676 097
- FR-A1- 2 907 695
- FR-A1- 2 915 121

## Description

### Dispositif d'usinage vibratoire

La présente invention concerne le domaine des dispositifs d'usinage de pièces, tel que les dispositifs de perçage et, plus particulièrement ceux intégrant un mouvement d'avance de l'outil coupant, par exemple du foret.

Un tel dispositif est bien connu de l'homme du métier, notamment par l'exemple qu'en donne le document de brevet FR 2 907 695, qui décrit une machine, qu'on appelle unité de perçage, comportant les caractéristiques du préambule de la revendication indépendante 1, notamment un mécanisme d'entraînement muni d'un pignon d'entraînement monté solidaire en rotation sur une broche porte-outil pour entraîner en rotation cette dernière, tout en lui autorisant un mouvement axial, et d'un pignon d'avance couplé à la broche porte outil par une liaison hélicoïdale pour entraîner la broche en translation le long de son axe, dans un mouvement d'avance, en fonction de la vitesse relative de rotation des pignons d'entraînement et d'avance.

A la différence des machines à commande numériques ou autres moyens de perçage utilisant des moteurs électriques, les unités de perçage ne possèdent généralement qu'un moteur (pneumatique ou électrique), qui assure, via le mécanisme d'entraînement, la mise en rotation de l'outil autour de son axe et simultanément son avance ou son recul par translation le long de son axe. Les entraînements en translation et en rotation étant mécaniquement liés, les paramètres opératoires des unités de perçage sont figés par le choix des pignons et constants tout au long du cycle de perçage. En particulier, le rapport entre la vitesse de rotation et la vitesse d'avance est imposé cinématiquement, donnant ainsi une avance par tour constante, qui ne peut donc être adaptée de façon optimale en fonction des matériaux percés. Ainsi, si une telle machine s'avère généralement satisfaisante, son utilisation pour percer des alésages profonds et / ou des empilages multi-matériaux peut s'avérer délicate.

En effet, dans ce contexte, l'évacuation des copeaux formés lors du perçage peut s'avérer difficile. Le bourrage des copeaux peut provoquer la casse ou une usure prononcée de l'outil de perçage, la dégradation de l'état des surfaces générées, plus particulièrement lors des opérations de perçage d'empilements de matériaux différents, ou une baisse importante de la productivité, notamment par la limitation imposée de paramètres de coupe comme la vitesse de rotation ou la vitesse d'avance.

Un remède à cet inconvénient consiste à provoquer la fragmentation de ces copeaux par variation de leur épaisseur, grâce à un perçage discontinu. Aussi, la machine de perçage décrite dans le document de brevet précité est-elle munie d'un système de déplacement du pignon d'avance par rapport au bâti de la machine, se présentant sous la forme d'un ensemble de came/suiveur de came, un premier de ces éléments étant solidaire en rotation de la broche et l'autre étant solidaire en rotation du pignon d'avance, permettant d'imposer un mouvement oscillatoire au mouvement d'avance de la broche le long de son axe lors du perçage. Ainsi, lors de l'avance de l'outil de perçage, ces oscillations axiales font varier l'épaisseur des copeaux, permettant de ce fait leur fragmentation et leur évacuation. Il en résulte toutefois un frottement au niveau de la came, qui génère un échauffement, de l'usure et du bruit. En outre, la fréquence des oscillations est fonction de la vitesse relative de rotation entre le pignon d'avance et la broche porte-outil et ne permet pas toujours d'obtenir les fréquences d'oscillation optimales pour une bonne fragmentation des copeaux, car le nombre d'oscillations par tour reste constant. Par conséquent, une telle machine ne pourra pas s'adapter à des configurations d'usinage multiples, par exemple au perçage avec des forets à deux arêtes ou à une seule arête, pour lesquelles les nombres d'oscillations par tour doivent être différents. En outre, les architectures proposées par le brevet suscité ne permettent pas de pouvoir commander un arrêt de la mise en oscillations en fonction des particularités du processus d'usinage. Or, un tel arrêt peut être rendu nécessaire, par exemple si le même outil doit réaliser un perçage suivi par la réalisation d'un chanfrein, ce dernier nécessitant un mouvement d'avance sans oscillations superposées. D'autres optimisations de l'assistance vibratoire à la fragmentation des copeaux sont également impossibles avec des principes connus, comme par exemple la variation en temps réel, pendant l'opération de perçage, de l'amplitude ou de la fréquence des oscillations imposées, ou la génération de formes d'oscillations différentes d'une sinusoïde, comme par exemple une forme d'oscillation en dents de scie.

Aussi, un but de la présente invention est de proposer un dispositif d'usinage amélioré, notamment un dispositif de perçage permettant une fragmentation des copeaux lors du perçage par superposition d'oscillations axiales au mouvement d'avance de l'outil, qui soit exempt de l'une au moins des limitations précédemment évoquées et, en particulier, qui soit simple à mettre en oeuvre, peu encombrant et dont les caractéristiques d'oscillation sont aisément adaptables.

A cet effet, la présente invention a pour objet un dispositif d'usinage comprenant un bâti, un arbre de transmission s'étendant le long d'un axe et apte à être couplé à un outil coupant, et un mécanisme d'entraînement de l'arbre de transmission, ledit mécanisme comprenant un premier organe d'engrenage couplé à l'arbre de transmission et apte à entraîner en rotation l'arbre de transmission autour de son axe par rapport au bâti, un deuxième organe d'engrenage en liaison hélicoïdale avec l'arbre de transmission et apte à entraîner en translation l'arbre de transmission le long de son axe par rapport au bâti selon un mouvement d'avance, en fonction de la vitesse relative de rotation desdits premier et deuxième organes d'engrenage, et des moyens de génération d'oscillations axiales aptes à générer un mouvement d'avance oscillant de l'arbre de transmission le long de son axe.

Selon l'invention, ledit deuxième organe d'engrenage est mobile en translation par rapport audit bâti le long de l'axe, lesdits moyens de génération d'oscillation axiales comprenant un actionneur électromécanique monté en repère fixe, lié audit bâti, ledit actionneur électromécanique étant apte à être couplé axialement audit deuxième organe d'engrenage pour le faire osciller en translation, de manière à superposer une composante d'oscillation axiale audit mouvement d'avance.

Selon d'autres caractéristiques avantageuses du dispositif d'usinage conforme à l'invention, prises isolément ou en combinaison :
- ledit actionneur électromécanique est en appui par une de ses extrémités sur une butée annulaire d'appui axial fixée audit bâti ;
- ladite butée annulaire d'appui axial comprend des moyens élastiques d'amortissement par l'intermédiaire desquels ladite extrémité dudit actionneur électromécanique est en appui sur ladite butée annulaire d'appui axial ;
- des moyens de couplage axial dudit deuxième organe d'engrenage avec une extrémité libre oscillante dudit actionneur électromécanique peuvent être prévus, permettant de limiter les frottements entre l'extrémité libre oscillante dudit actionneur électromécanique monté fixe en rotation autour de l'axe et ledit deuxième organe d'engrenage entraîné en rotation autour de l'axe ;
- lesdits moyens de couplage axial comprennent un moyen de roulement comportant un chemin de roulement fixe formé sur une bague fixe rapportée sur l'arbre de transmission et destinée à être associée à l'extrémité libre dudit actionneur électromécanique et un chemin de roulement tournant destiné à être associé audit deuxième organe d'engrenage, des éléments tournants étant disposés entre lesdits chemins de roulement fixe et tournant.
- ledit chemin de roulement tournant est formé soit directement sur ledit deuxième organe d'engrenage, soit sur une bague tournante rapportée sur le deuxième organe d'engrenage ;
- ledit deuxième organe d'engrenage est en liaison glissière dans la direction de l'axe avec un support, ledit support recevant un mouvement de rotation et étant en liaison pivot par rapport audit bâti ;
- ladite liaison glissière entre ledit deuxième organe d'engrenage et ledit support dans la direction de l'axe est réalisée par des moyens de guidage élastiques ;
- ledit dispositif peut comprendre un pivot glissant entre ledit deuxième organe d'engrenage et ledit bâti ;
- un mécanisme de rappel élastique du deuxième organe d'engrenage en une position axiale nominale par rapport au bâti peut être prévu, le mécanisme de rappel élastique étant adapté pour autoriser les mouvements du deuxième organe d'engrenage par rapport au bâti dans la direction de l'axe sous l'effet dudit actionneur, tout en sollicitant le deuxième organe d'engrenage dans une direction axiale opposée à la direction du mouvement d'avance de l'arbre ;
- ledit actionneur électromécanique peut être un actionneur piézoélectrique ou magnétostrictif ou électrostrictif.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est un schéma illustrant la cinématique d'un mécanisme d'entrainement d'une unité de perçage dit à avance programmée, auquel l'invention peut être appliquée ;
- la Figure 2 est un schéma similaire à la figure 1, détaillant l'agencement de la partie de guidage de l'arbre selon un mode de réalisation de l'invention, pour combiner le mouvement d'avance de l'arbre de transmission de sortie avec un mouvement oscillatoire le long de l'axe.

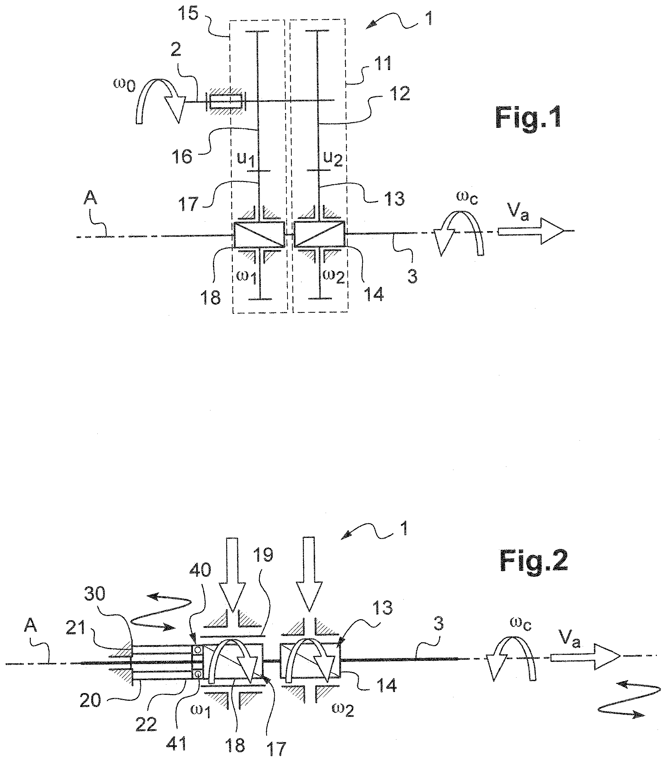

La figure 1, illustre une structure cinématique classique d'un dispositif de perçage présentant un mécanisme d'entraînement 1 constituant un mécanisme d'entraînement dit à avance programmée, reliant mécaniquement un arbre de transmission d'entrée 2 à un arbre de transmission de sortie 3, auquel est destiné à être couplé un outil coupant, en l'occurrence un outil de perçage. L'arbre 2 du mécanisme d'entraînement est accouplé à un moteur d'entraînement ou à un ensemble moteur / réducteur. L'ensemble de ces éléments est au moins partiellement logé dans un bâti du dispositif de perçage et l'arbre de transmission de sortie 3 est reçu dans le bâti de manière mobile en rotation autour de son axe A et en translation le long de cet axe A.

Selon l'exemple de réalisation de la figure 1, le mécanisme d'entraînement 1 comprend un premier moyen d'engrenage 11, qui permet de transformer le mouvement de rotation de l'arbre d'entrée 2 en un mouvement de rotation de l'arbre de sortie 3. Ce premier moyen d'engrenage comporte par exemple une première roue d'entraînement 12 fixée sur l'arbre d'entrée 2 engrenant sur un premier organe d'engrenage 13 couplé à l'arbre de sortie 3, de façon à ce que l'organe d'engrenage 13 tourne avec l'arbre de sortie 3 tout en autorisant un déplacement en translation de celui-ci le long de son axe A par rapport au premier organe d'engrenage 13, la liaison entre le premier organe d'engrenage 13 et l'arbre de transmission de sortie 3 étant par exemple une liaison glissière 14, l'arbre de transmission de sortie 3 pouvant comporter des cannelures dans lesquelles s'engagent des nervures correspondantes du premier organe d'engrenage 13.

Conformément aux mécanismes d'entraînement classiques à avance mécanique programmée, le mécanisme d'entraînement 1 comprend un deuxième moyen d'engrenage 15, permettant de transformer le mouvement de rotation de l'arbre de transmission d'entrée 2 en un mouvement d'avance de l'arbre de transmission de sortie 3. Ce deuxième moyen d'engrenage 15 peut par exemple comprendre une deuxième roue d'entraînement 16 couplée à l'arbre d'entrée 2 et permettant d'engrener un deuxième organe d'engrenage 17 couplé à l'arbre de sortie 3. Le deuxième organe d'engrenage 17 est couplé à l'arbre de transmission de sortie 3 par l'intermédiaire d'une liaison hélicoïdale 18, permettant de transformer le mouvement de rotation du deuxième organe d'engrenage 17 relativement à l'arbre de transmission de sortie 3 en un mouvement de translation correspondant de l'arbre de transmission de sortie 3 le long de son axe A par rapport au bâti, de sorte que l'arbre de transmission de sortie 3 avance le long de l'axe A par rapport au bâti en fonction de la vitesse relative de rotation des premier et deuxième organes d'engrenage 13 et 17. En effet, la liaison hélicoïdale va transformer le mouvement de rotation relative entre le deuxième organe d'engrenage 17 et l'arbre de transmission de sortie 3 en un mouvement de translation. Le choix judicieux des deux rapports de transmission u1 et u2, respectivement entre le deuxième organe d'engrenage 17 et la deuxième roue d'entraînement 16 et entre le premier organe d'engrenage 13 et la première roue d'entraînement 12, permettra d'obtenir une avance de faible valeur (quelques centièmes de millimètres) tout en mettant en oeuvre une liaison hélicoïdale à pas relativement important et facile à réaliser (quelques millimètres).

En variante, les mouvements de rotation des organes d'engrenage 13 et 17 peuvent également être fournis par deux chaines cinématique parallèles, plus complexes que celles présentées ci-dessus, mais qui reçoivent le mouvement d'entrainement du même moteur ou couple moteur/réducteur.

Il a été expliqué précédemment que les copeaux qui se forment au cours du perçage d'un matériau peuvent être évacués plus facilement si ces derniers se fragmentent en même temps qu'ils se forment. On cherche classiquement à rendre cette fragmentation possible en imprimant à l'outil de perçage couplé à l'arbre de transmission de sortie 3 un mouvement d'avance oscillant, en superposant au mouvement d'avance généré par le deuxième organe d'engrenage 17 via la liaison hélicoïdale avec l'arbre de sortie 3, un mouvement oscillant.

La solution proposée par la présente invention pour générer le mouvement d'avance oscillant peut être appliquée à tout dispositif d'usinage comprenant un mécanisme d'entraînement de l'arbre de transmission présentant une chaîne cinématique telle que décrite en référence à la figure 1, mais peut s'appliquer, de manière plus large, indépendamment du choix de la chaîne cinématique conçue pour transmettre les mouvements à l'arbre de transmission de sortie 3 et, en particulier, conçue pour transmettre les deux mouvements de rotation respectivement au premier et au deuxième organe d'engrenage 13 et 17. Aussi, la solution qui va maintenant être décrite peut-elle être appliquée à toute chaîne cinématique mettant en oeuvre un arbre de transmission de sortie couplé à un premier organe d'engrenage apte à entraîner l'arbre en rotation autour de son axe à l'intérieur d'un bâti en le laissant libre en translation, le bâti logeant un mécanisme d'entraînement comprenant un deuxième organe d'engrenage couplé à l'arbre par une liaison hélicoïdale de sorte à provoquer l'avance automatique de l'arbre le long de son axe relativement au bâti sous l'effet de l'entraînement en rotation de l'arbre et ce, quelle que soit la manière dont la différence entre la vitesse de rotation ω1 du deuxième organe d'engrenage et la vitesse de rotation ω2 du premier organe d'engrenage est réalisée.

Comme illustré à la figure 2, le deuxième organe d'engrenage 17, couplé à l'arbre de transmission de sortie 3 par l'intermédiaire de la liaison hélicoïdale 18, est mobile axialement à l'intérieur du bâti selon l'axe A. Pour ce faire, le deuxième organe d'engrenage 17, entraîné en rotation relativement au bâti, est en liaison glissière d'axe A avec un support 19, qui est lui-même en liaison pivot par rapport au bâti. Cette liaison glissière a la particularité de devoir assurer une course de faible amplitude, égale à l'amplitude des oscillations qui seront imposées, typiquement de l'ordre du dixième de millimètres, préférentiellement de 0,1 à 0,2 mm. Ainsi, bien qu'elle puisse être réalisée par des moyens classiques pour une liaison glissière (palier lisse, patins à éléments roulants etc.), elle peut aussi être réalisée par des moyens de guidage élastiques, qui peuvent être assimilés à une liaison glissière de faible course. En variante, un pivot glissant dans la direction de l'axe A peut être agencé entre le deuxième organe d'engrenage 17 et le bâti, de sorte que le deuxième organe d'engrenage 17 destiné à imprimer le mouvement d'avance à l'arbre de transmission de sortie 3, est mobile en translation par rapport au bâti le long de l'axe A. Par ailleurs, l'arbre de transmission de sortie 3 est solidaire en translation du deuxième organe d'engrenage 17 du fait de la liaison hélicoïdale 18 entre eux, le deuxième organe d'engrenage 17 formant l'élément écrou de cette liaison hélicoïdale 18 étant vissé sur un tronçon fileté de l'arbre de sortie 3.

Conformément à l'invention, les moyens de génération d'oscillations axiales destinés à permettre un mouvement d'avance oscillant de l'arbre de transmission de sortie 3 le long de son axe A, comprennent un actionneur électromécanique 20, par exemple de type piézoélectrique, dont les oscillations, engendrées par une tension variable qui lui est appliquée, sont orientées le long de l'axe A. L'actionneur 20 peut également être de type magnétostrictif ou électrostrictif ou mettant en oeuvre tout autre type de milieu et phénomènes physiques, par exemple électrohydraulique ou électropneumatique, capables de fournir une oscillation générée par un signal de commande extérieur.

L'actionneur électromécanique 20, de forme tubulaire, est enfilé sur l'arbre de transmission de sortie 3 en arrière du deuxième organe d'engrenage 17 constituant l'élément écrou de la liaison hélicoïdale 18 avec l'arbre de transmission de sortie 3, et est destiné à être couplé axialement au deuxième organe d'engrenage 17 pour le faire osciller en translation le long de l'axe A, lorsqu'il est commandé, de manière à superposer une composante d'oscillation axiale au mouvement d'avance de l'arbre imprimé par le deuxième organe d'engrenage 17.

L'actionneur électromécanique 20 est avantageusement monté en repère fixe, lié au bâti, dit autrement il est non tournant autour de l'axe A de l'arbre de sortie 3 relativement au bâti, ce qui simplifie grandement son alimentation électrique, en évitant ainsi d'avoir à mettre en oeuvre des solutions complexes et coûteuses, par exemple de type collecteur tournant à base de contacts glissants. Pour ce faire, l'actionneur électromécanique 20 est en appui par une de ses extrémités 21 sur une butée annulaire d'appui axial 30 fixée au bâti, afin de laisser l'actionneur 20 en repère fixe. La butée annulaire d'appui axial 30 peut comprendre des moyens élastiques d'amortissement (non représentés), interposés entre la butée elle-même et l'extrémité 21 de l'actionneur électromécanique 20 destinée à venir en appui sur la butée 30.

En avant de l'actionneur électromécanique 20 monté fixe en rotation autour de l'axe A, une extrémité libre oscillante 22 de l'actionneur 20, qui est située à l'opposé de l'extrémité 21 en appui axial sur la cale 30 fixé au bâti, est destinée à être couplée au deuxième organe d'engrenage 17 pour le faire osciller en translation le long de l'axe A au travers de la liaison glissière 19, de manière à superposer une composante d'oscillation axiale au mouvement d'avance uniforme de l'arbre 3 selon l'axe A, généré à partir du mouvement de rotation relative entre le deuxième organe d'engrenage 17 et l'arbre de transmission de sortie 3.

Le deuxième organe d'engrenage 17 est préférentiellement monté mobile axialement par rapport au bâti dans la direction de l'axe A par l'intermédiaire d'un mécanisme de rappel élastique (non représenté) du deuxième organe d'engrenage 17 en une position axiale nominale par rapport au bâti. Le mécanisme de rappel élastique associé à la liaison glissière ou au pivot glissant est adapté pour autoriser les mouvements du deuxième organe d'engrenage 17 par rapport au bâti dans la direction de l'axe A sous l'effet de l'actionneur 20, tout en sollicitant le deuxième organe d'engrenage 17 dans une direction axiale opposée à la direction du mouvement d'avance de l'arbre 3. Ainsi, le deuxième organe d'engrenage 17 est sollicité pour être couplé avec l'extrémité libre oscillante 22 de l'actionneur 20 par le mécanisme de rappel élastique.

Le couplage entre l'extrémité libre oscillante 22 de l'actionneur électromécanique 20 et le deuxième organe d'engrenage 17 peut être assuré par des moyens de couplage axial 40, permettant de limiter les frottements entre l'extrémité libre oscillante 22 de l'actionneur 20, monté fixe en rotation autour de l'axe A, et le deuxième organe d'engrenage 17 entraîné en rotation autour de l'axe A. Ces moyens de couplage axial 40 peuvent être mis en oeuvre sous la forme d'un moyen de roulement 41 comportant un chemin de roulement fixe, formé sur une bague fixe rapportée sur l'arbre de sortie 3 de manière mobile par rapport bâti le long de l'axe A et destinée à être associée à l'extrémité libre oscillante 22 de l'actionneur électromécanique 20, et un chemin de roulement tournant, destiné à être fixé au deuxième organe d'engrenage 17, tandis que des éléments tournants sont disposés entre les chemins de roulement fixe et tournant. Le chemin de roulement tournant peut être formé soit directement sur le deuxième organe d'engrenage, soit sur une bague tournante rapportée sur le deuxième organe d'engrenage.

Le dispositif d'usinage selon l'invention assure une meilleure maîtrise des oscillations axiales combinées au mouvement d'avance de l'arbre, notamment en raison du fait que l'actionneur électromécanique mis en oeuvre est pilotable en temps réel par des moyens de commande réagissant à un simple ajustement des caractéristiques de son alimentation électrique. Aussi, il est possible de régler à la fois l'amplitude et la fréquence des oscillations y compris pendant une opération de perçage en cours, ce qui est particulièrement avantageux pour la mise en oeuvre d'un processus de perçage adaptatif, notamment pour tenir compte des différents matériaux traversés dans une même opération ou de la configuration particulière du processus d'usinage, comme par exemple dans le cas d'une opération combinée réalisant avec un seul outil, un perçage suivi par un chanfreinage. Le dispositif d'usinage selon l'invention permet également, grâce au pilotage de l'actionneur électromécanique, d'introduire des oscillations de forme autre que sinusoïdale, par exemple de forme en dents de scie, ce qui, combiné avec la possibilité de réglage adaptatif en temps réel des caractéristiques de fréquence et d'amplitude des oscillations imposées, permet de prolonger la durée de vie de l'outil coupant, par exemple de l'outil de perçage dans le cadre de l'application au perçage.

Enfin, la solution selon l'invention telle qu'elle vient d'être décrite pour combiner le mouvement d'avance de l'arbre de transmission de sortie avec un mouvement oscillatoire le long de son axe, pourra être facilement adaptée à tout type d'unité d'usinage, étant donné que des opérations autres que le perçage restent réalisables et dans la mesure où les moyens mis en oeuvre pour générer les oscillations axiales interviennent uniquement dans la partie de guidage de l'arbre, indépendamment de la chaîne cinématique qui fournit les deux mouvements de rotation respectivement au premier organe d'engrenage 13 pour l'entraînement en rotation de l'arbre autour de son axe et au deuxième organe d'engrenage 17 pour l'entraînement en translation de l'arbre le long de son axe. Ainsi, la solution proposée pourra par exemple être utilisée dans la conception d'un moyen d'usinage de type électrobroche, procurant ainsi l'avantage de l'intégration du mouvement d'avance dans ledit moyen d'usinage et de l'assistance vibratoire.

## Revendications

1. Dispositif d'usinage comprenant un bâti, un arbre de transmission (3) s'étendant le long d'un axe (A) et apte à être couplé à un outil coupant, et un mécanisme d'entraînement (1) de l'arbre de transmission, ledit mécanisme comprenant un premier organe d'engrenage (13) couplé à l'arbre de transmission (3) et apte à entraîner en rotation l'arbre de transmission autour de son axe par rapport au bâti, un deuxième organe d'engrenage (17) en liaison hélicoïdale avec l'arbre de transmission (3) et apte à entraîner en translation l'arbre de transmission (3) le long de son axe (A) par rapport au bâti selon un mouvement d'avance, en fonction de la vitesse relative de rotation desdits premier et deuxième organes d'engrenage, et des moyens de génération d'oscillations axiales aptes à générer un mouvement d'avance oscillant de l'arbre de transmission le long de son axe, ledit deuxième organe d'engrenage (17) étant mobile en translation par rapport audit bâti le long de l'axe (A), **caractérisé en ce que** lesdits moyens de génération d'oscillation axiales comprennent un actionneur électromécanique (20) monté en repère fixe, lié audit bâti, ledit actionneur électromécanique (20) étant apte à être couplé axialement audit deuxième organe d'engrenage (17) pour le faire osciller en translation, de manière à superposer une composante d'oscillation axiale audit mouvement d'avance.

2. Dispositif selon la revendication 1, **caractérisé en ce que** ledit actionneur électromécanique (20) est en appui par une de ses extrémités (21) sur une butée annulaire d'appui axial (30) fixée audit bâti.

3. Dispositif selon la revendication 2, **caractérisé en ce que** ladite butée annulaire d'appui axial (30) comprend des moyens élastiques d'amortissement par l'intermédiaire desquels ladite extrémité dudit actionneur électromécanique est en appui sur ladite butée annulaire d'appui axial.

4. Dispositif selon l'une quelconque des revendications précédentes, **caractérisé en ce qu'**il comprend des moyens de couplage axial (40) dudit deuxième organe d'engrenage (17) avec une extrémité libre oscillante (22) dudit actionneur électromécanique (20), permettant de limiter les frottements entre l'extrémité libre oscillante (22) dudit actionneur électromécanique (20) monté fixe en rotation autour de l'axe (A) et ledit deuxième organe d'engrenage (17) entraîné en rotation autour de l'axe (A).

5. Dispositif selon la revendication 4, **caractérisé en ce que** lesdits moyens de couplage axial (40) comprennent un moyen de roulement (41) comportant un chemin de roulement fixe formé sur une bague fixe rapportée sur l'arbre de transmission (3) et destinée à être associée à l'extrémité libre (22) dudit actionneur électromécanique (20) et un chemin de roulement tournant destiné à être associé audit deuxième organe d'engrenage (17), des éléments tournants étant disposés entre lesdits chemins de roulement fixe et tournant.

6. Dispositif selon la revendication 5, **caractérisé en ce que** ledit chemin de roulement tournant est formé soit directement sur ledit deuxième organe d'engrenage (17), soit sur une bague tournante rapportée sur le deuxième organe d'engrenage (17).

7. Dispositif selon l'une quelconque des revendications précédentes, **caractérisé en ce que** ledit deuxième organe d'engrenage (17) est en liaison glissière dans la direction de l'axe (A) avec un support (19), ledit support recevant un mouvement de rotation et étant en liaison pivot par rapport audit bâti.

8. Dispositif selon la revendication 7, **caractérisé en ce que** ladite liaison glissière entre ledit deuxième organe d'engrenage (17) et ledit support (19) dans la direction de l'axe (A) est réalisée par des moyens de guidage élastiques.

9. Dispositif selon l'une quelconque des revendications précédentes, **caractérisé en ce qu'**il comprend un pivot glissant entre ledit deuxième organe d'engrenage (17) et ledit bâti.

10. Dispositif selon l'une quelconque des revendications précédentes, **caractérisé en ce qu'**il comprend un mécanisme de rappel élastique du deuxième organe d'engrenage (17) en une position axiale nominale par rapport au bâti, le mécanisme de rappel élastique étant adapté pour autoriser les mouvements du deuxième organe d'engrenage (17) par rapport au bâti dans la direction de l'axe (A) sous l'effet dudit actionneur (20), tout en sollicitant le deuxième organe d'engrenage (17) dans une direction axiale opposée à la direction du mouvement d'avance de l'arbre (3).

11. Dispositif selon l'une quelconque des revendications précédentes, **caractérisé en ce que** ledit actionneur électromécanique (20) est un actionneur piézoélectrique ou magnétostrictif ou électrostrictif.

## Patentansprüche

1. Bearbeitungsvorrichtung, die einen Rahmen, eine Kraftübertragungswelle (3), die sich längs einer Achse (A) erstreckt und mit einem Schneidwerkzeug gekoppelt werden kann, und einen Antriebsmechanismus (1) für die Kraftübertragungswelle umfasst, wobei der Mechanismus ein erstes Getriebeorgan (13), das mit der Kraftübertragungswelle (3) gekoppelt ist und die Kraftübertragungswelle um ihre Achse in Bezug auf den Rahmen rotatorisch antreiben kann, ein zweites Getriebeorgan (17) in einer Schneckenverbindung mit der Kraftübertragungswelle (3), die die Kraftübertragungswelle (3) längs ihrer Achse (A) in Bezug auf den Rahmen zu einer Vorwärtsbewegung als Funktion der relativen Drehgeschwindigkeit des ersten und des zweiten Getriebeorgans translatorisch antreiben kann, und Mittel zum Erzeugen axialer Oszillationen, die eine oszillierende Vorwärtsbewegung der Kraftübertragungswelle längs ihrer Achse erzeugen können, umfasst, wobei das zweite Getriebeorgan (17) in Bezug auf den Rahmen längs der Achse (A) translatorisch beweglich ist, **dadurch gekennzeichnet, dass** die Mittel zum Erzeugen axialer Oszillationen einen elektromechanischen Aktor (20) umfassen, der an einem festen Punkt montiert ist und mit dem Rahmen verbunden ist, wobei der elektromechanische Aktor axial mit dem zweiten Getriebeorgan (17) gekoppelt werden kann, um es translatorisch oszillieren zu lassen, derart, dass der Vorwärtsbewegung eine axiale Oszillationskomponente überlagert wird.

2. Vorrichtung nach Anspruch 1, **dadurch gekennzeichnet, dass** sich der elektromechanische Aktor (20) mit einem seiner Enden (21) an einem ringförmigen Axialabstützungsanschlag (30), der an dem Rahmen befestigt ist, abstützt.

3. Vorrichtung nach Anspruch 2, **dadurch gekennzeichnet, dass** der ringförmige Axialabstützungsanschlag (30) elastische Dämpfungsmittel umfasst, über die das Ende des elektromechanischen Aktors an dem ringförmigen Axialabstützungsanschlag abgestützt ist.

4. Vorrichtung nach einem der vorhergehenden Ansprüche, **dadurch gekennzeichnet, dass** sie Mittel (40) zum axialen Koppeln des zweiten Getriebeorgans (17) mit einem oszillierenden freien Ende (22) des elektromechanischen Aktors (20) umfasst, die ermöglichen, die Reibung zwischen dem oszillierenden freien Ende (22) des elektromechanischen Aktors (20), das drehfest um die Achse (A) montiert ist, und dem zweiten Getriebeorgan (17), das um die Achse (A) rotatorisch angetrieben wird, zu begrenzen.

5. Vorrichtung nach Anspruch 4, **dadurch gekennzeichnet, dass** die Axialkopplungsmittel (40) ein Rollmittel (41) umfassen, das einen festen Rollweg, der an einem an die Kraftübertragungswelle (3) angefügten festen Ring gebildet ist und dazu bestimmt ist, dem freien Ende (22) des elektromechanischen Aktors (20) zugeordnet zu werden, und einen drehenden Rollweg, der dazu bestimmt ist, dem zweiten Getriebeorgan (17) zugeordnet zu werden, aufweist, wobei zwischen dem festen Rollweg und dem drehenden Rollweg Drehelemente angeordnet sind.

6. Vorrichtung nach Anspruch 5, **dadurch gekennzeichnet, dass** der drehende Rollweg entweder direkt an dem zweiten Getriebeorgan (17) oder an einem an das zweite Getriebeorgan (17) angefügten Drehring ausgebildet ist.

7. Vorrichtung nach einem der vorhergehenden Ansprüche, **dadurch gekennzeichnet, dass** das zweite Getriebeorgan (17) in einer Gleitverbindung in Richtung der Achse (A) mit einem Träger (19) ist, wobei der Träger eine Drehbewegung aufnimmt und in einer Drehverbindung in Bezug auf den Rahmen ist.

8. Vorrichtung nach Anspruch 7, **dadurch gekennzeichnet, dass** die Gleitverbindung zwischen dem zweiten Getriebeorgan (17) und dem Träger (19) in Richtung der Achse (A) durch elastische Führungsmittel verwirklicht ist.

9. Vorrichtung nach einem der vorhergehenden Ansprüche, **dadurch gekennzeichnet, dass** sie einen Drehelement umfasst, das zwischen dem zweiten Getriebeorgan (17) und dem Rahmen gleitet.

10. Vorrichtung nach einem der vorhergehenden Ansprüche, **dadurch gekennzeichnet, dass** sie einen elastischen Rückstellmechanismus für das zweite Getriebeorgan (17) in eine axiale Nennposition in Bezug auf den Rahmen umfasst, wobei der elastische Rückstellmechanismus dafür ausgelegt ist, die Bewegungen des zweiten Getriebeorgans (17) in Bezug auf den Rahmen in Richtung der Achse (A) unter der Wirkung des Aktors (20) zuzulassen und dabei das zweite Getriebeorgan (17) in einer axialen Richtung entgegengesetzt zu der Vorwärtsbewegungsrichtung der Welle (3) vorzubelasten.

11. Vorrichtung nach einem der vorhergehenden Ansprüche, **dadurch gekennzeichnet, dass** der elektromechanische Aktor (20) ein piezoelektrischer oder magnetostriktiver oder elektrostriktiver Aktor ist.

## Claims

1. A machining device comprising a frame, a driving shaft (3) extending along an axis (A) and intended to be coupled with a cutting tool, and a mechanism (1) for driving the driving shaft, said mechanism comprising a first gear member (13) coupled to the driving shaft (3) and intended to rotate the driving shaft about its axis relatively to the frame, a second gear member (17) helically connected to the driving shaft (3) and intended to translate the driving shaft (3) along its axis (A) relatively to the frame with an advance movement, according to the relative rotation speed of said first and second gear members, and means for generating axial oscillations intended to generate an oscillating advance movement of the driving shaft along its axis, said second gear member (17) being translatable relatively to said frame along the axis (A), **characterized in that** said means for generating axial oscillations comprise an electromechanical actuator (20) mounted at fixed reference, attached to said frame, said electromechanical actuator (20) being intended to be axially coupled to said second gear member (17) in order to make it translationally oscillates, so as to superimpose an axial oscillation component to said advance movement.

2. The device according to claim 1, **characterized in that** said electromechanical actuator (20) bears at one of its ends (21) on an axial bearing annular stop (30) secured to said frame.

3. The device according to claim 2, **characterized in that** said axial bearing annular stop (30) comprises elastic damping means through which said end of said electromechanical actuator bears against said axial bearing annular stop.

4. The device according to any of the preceding claims, **characterized in that** it comprises axial connecting means (40) for said second gear member (17) with an oscillating free end (22) of said electromechanical actuator (20), making it possible to limit the friction between the oscillating free end (22) of said electromechanical actuator (20) fixedly mounted for rotation about the axis (A) and said second gear member (17) rotated about the axis (A).

5. The device according to claim 4, **characterized in that** said axial connecting means (40) comprise a rolling means (41) including a fixed rolling track provided on a fixed ring arranged on the driving shaft (3) and intended to be associated to the free end (22) of said electromechanical actuator (20) and a rotating rolling track intended to be associated to said second gear member (17), rotating members being laid out between said fixed and rotating rolling tracks.

6. The device according to claim 5, **characterized in that** said rotating rolling track is provided either directly on said second gear member (17), or on a rotating ring arranged on the second gear member (17).

7. The device according to any of the preceding claims, **characterized in that** said second gear member (17) is slidingly connected in the axis (A) direction with a support (19), said support being rotationally driven and being pivotally connected relatively to said frame.

8. The device according to claim 7, **characterized in that** said sliding connection between said second gear member (17) and said support (19) in the axis (A) direction is carried out by elastic guiding means.

9. The device according to any of the preceding claims, **characterized in that** it comprises a pivot sliding between said second gear member (17) and said frame.

10. The device according to any of the preceding claims, **characterized in that** it comprises an elastic return mechanism for the second gear member (17) to a nominal axial position relatively to the frame, the elastic return mechanism being adapted to allow the movements of the second gear member (17) relatively to the frame in the axis (A) direction under the effect of said actuator (20), while urging the second gear member (17) in an axial direction opposed to the advance movement direction of shaft (3).

11. The device according to any of the preceding claims, **characterized in that** said electromechanical actuator (20) is a piezoelectric or magnetostrictive or electrostrictive actuator.
